# EUROPEAN PATENT APPLICATION

(11) **EP 0 615 373 A1**
(43) Date of publication of application: **14.09.1994**
(21) Application number: 94300733.6
(22) Date of filing: 01.02.1994
(51) Int. Cl.: H04M 3/42, H04Q 3/62, H04M 3/50

(54) **Method and system for unified voice telephone services**

(30) Priority: 10.02.1993 US 16062
(71) Applicant: INTERVOICE, INC., Dallas, Texas 75252 (US)
(72) Inventor: Cave, Ellis K., Dallas,Texas 75043 (US); Polcyn, Michael J., Collin Texas 75002 (US)
(74) Representative: Howick, Nicholas Keith

(57) **Abstract**

Disclosed is an integrated telephone call session record-keeping system that creates and stores a single record containing data gathered during a single call session and retains the single record throughout a duration of the call to thereby eliminate a need to gather a particular datum multiple times during the particular call. The record contains information gathered from a caller and from various functional partitions within the system itself. The system comprises a common memory (310) for storing voice, text and/or image data and a common processor (210) for accessing the common memory (310) to thereby provide interaction with a telephone exchange coupled to the processor. The disclosed system is able to replace several prior art separate systems, including: automatic call directing systems, audio text systems, voice mail systems, voice response systems, automatic number identification systems, image-based systems and outbound calling systems.

## Description

### TECHNICAL FIELD OF THE INVENTION

This invention relates to telephone communication systems and, more particularly, to an architecture in a computer-based system that allows integration of data processing and call processing features.

### BACKGROUND OF THE INVENTION

Over the years, various systems have been developed to operate in conjunction with telephone systems to provide specialized functions that lend power, versatility and efficiency to telecommunications.

These various systems are designed to operate on data in one or more of three general categories: voice, text and image. Together, these types of data encompass all data desired to be processed or transmitted in communication systems.

The above-described data can be processed or communicated in ways that can be generally categorized as "Mail" (also termed "Store and Forward"), "Interactive" and "Bulletin" systems. Mail systems allow a user to retrieve voice, text or images that have been exclusively addressed to the user. In such mail systems, it is typical to require the user to enter a unique password to gain access to the exclusively-addressed data. Interactive systems allow a user to control what data the interactive system delivers to the user, and, perhaps, in what order the data is delivered. Unlike mail systems, however, the data need not be exclusively-addressed, and thus can be publicly available. Lastly, bulletin systems allow a user to retrieve publicly available information in a non-interactive, system-controlled fashion.

One such system directed to handling of data is automatic call distribution ("ACD"), wherein a pool of attendants is assigned to answer calls incoming on a particular trunk of telephone lines. ACD systems handle these calls as they arrive, assigning them to attendants in the order received and choosing the attendants based on length of idle time. This algorithm of queueing is called "fair queueing." Because human attendants are present, such ACD systems are interactive.

Another such system is audio text. Audio text system are designed to "play" a message stored in a memory device to a person listening on the other end of the call. These systems are generally not interactive and can be bulletin systems.

Yet another such system is a modem pool. Modem pool systems function in a manner similar to ACD systems. As a plurality of computers make incoming calls to a central pool of modems, typically attached to a single, large, general-purpose computer, the modem pool system assigns the incoming calls in a "fair queueing" manner. Such systems are typically interactive.

Still another such system is a predictive dialer. Predictive dialers are used in outbound calling applications and typically in conjunction with a pool of attendants. Predictive dialers employ statistical techniques to predict the length of time, on average, attendants take to handle calls. These dialers further gather statistics regarding the average time required to successfully connect an outbound call. The dialers use these averages and data pertaining to attendant availability to place calls from a list of numbers to be dialed, employing their predictive ability to maximize agent utilization. These systems can be mail, interactive or bulletin.

Another such system is voice mail. Voice mail allows callers to leave voice messages with those called. Voice mail systems typically play greeting messages recorded by the called parties, record the time and origin of received messages and allow for callers to exit the system to speak with a human, if desired. Obviously, voice mail systems are categorized as mail systems.

Yet another such system is interactive voice response ("IVR"), actually an extension of audio text systems. An IVR system allows callers to access computer-resident data such as account balances or stock prices through a standard telephone. The IVR system allows the caller to query for data using touch-tone signals, and the result is returned as spoken words. Again, it is obvious that such systems are interactive and can be mail.

Another such system is facsimile ("fax"). This ubiquitous system has exploded onto the marketplace in recent years and, as is nearly universally understood, gives one the capability to send paper-borne images by telephone. Such systems are image-based and can be implemented as mail, interactive or bulletin systems.

Other image-based systems are adapted to handle graphics or moving images (video). As with fax, these graphics or moving image systems can be mail, interactive or bulletin.

The last of the systems to be described here is automatic number identification ("ANI") systems. These systems are designed to take inbound calls and detect special signals delivered from a central office indicating the phone number of the calling party. Since the signals can uniquely identify the calling party, the call can then be routed to a specific agent or IVR application able to handle that caller.

As useful and desirable as these individual systems are, they have always been thought of as independent systems that, at best, adhere to a common protocol for interface and data interchange, allowing them to be attached to and cooperate with, telephone systems, either separately or in combination. However, it should be understood that, in any case, these systems do not cooperate in any fashion apart from superficial connectivity via industry standard telephony connections. Some manufacturers who happen to make more than one type of system may provide a proprietary interface or protocol between systems, but these proprietary links are just that: cooperation at a connectivity level.

Computer technology has worked itself into telephony as effectively as it has in so many other areas. Accordingly, over the years, the above-described systems have moved from the analog to the digital domain, employing digital processors, memory, digital storage media, data and address buses and the like. As it is, each of these systems stands alone, each having its own computer hardware and software. If one wishes to use two systems together, he must live with the fact that the systems do not share any hardware or software. This means redundancy and waste.

Another disadvantage of the separate nature of the systems is that each collects call routing and other control data, including data collected during the course of its interaction with a party during a particular call. For instance, assume a system allowing for both ACD and voice mail such that incoming callers may choose to leave a message if all attendants are busy. As a particular call begins, the ACD system elicits information from the caller pertaining to the reason for his call. Using either ANI or voice recognition, the ACD system captures and stores this information to direct the call to the proper attendants or to prompt an attendant ahead of time as to what is needed.

The caller, however, grows weary of waiting and wishes to exit the ACD queue. The ACD system allows for this by providing for an exit upon receipt of a particular tone. However, when the caller successfully exits the ACD queue, he finds himself prompted to supply the very same information to the voice mail system to thereby allow the voice mail system to collect the needed information. The caller has had to give the same information twice, owing to the lack of coordination between the systems.

Of course, if the systems are supplied by the same manufacturer, proprietary interfaces and protocols may allow transfer of the information. But even if this disadvantage is overcome, the systems still duplicate hardware and software. As a particular application demands more and more functions, the problems of integrating the various necessary systems become more acute and perplexing.

Other problems abound. These systems, because they stand alone, have separate maintenance consoles and control languages. The systems must be interconnected by cables that, as the number of cables grows, increases the chances of failure. The loose connectivity of these systems limits rates of data transfer between the systems. In fact, adjunct switching matrices are frequently required to perform ancillary switching tasks that would overload the main switching system, typically a private branch exchange ("PBX").

These systems frequently offer the option of providing reports and statistics concerning their operation. These reports and statistics are frequently incompatible and difficult to integrate. Most often, there is simply no one place from which to obtain reports and statistics. Because of the duplication of hardware and software, these systems are difficult to manage, they are larger and more costly than necessary, and they consume more power and produce more heat than is optimal. In short, integration of these various systems has been a long felt need in the art, but one that, thus far, has been met with dissatisfaction.

Unfortunately, the prior art has utterly failed to provide an effective means by which to integrate these systems, allowing them to share information and resources among themselves to an extent never before possible.

### SUMMARY OF THE INVENTION

Accordingly, to solve the above-described problems inherent in the prior art, it is a primary object of the present invention to provide an integrated telephone call session record-keeping system comprising (1) means for creating a single record containing data gathered during a single call session and (2) means for storing data pertaining to the single call session in the single record throughout a duration of the call, the data gathered from a plurality of functional partitions within the system to thereby eliminate a need to gather a particular datum multiple times during the single call. This results in a tight integration of the various functional partitions within the system and allow data to travel among the various functional partitions in a free manner, preventing a need to reprompt for information from the caller and allowing integrated reports to be generated. To the caller, who is generally ignorant of the complexities of the system with which he is dealing, the system seems seamless and relatively more intelligent.

It is a further object of the present invention to provide a system wherein the record contains information gathered from a caller. In this way, the caller can provide information to the system, for instance, the caller's bank account number, and be assured that the information will remain in the system throughout the duration of the call.

It is another object of the present invention to provide a system wherein the record contains information gathered from the functional partitions. This allows the functional partitions to leave a record concerning their activity. For instance, one partition may leave an indication that it has already provided information to the caller, perhaps a warning concerning substantial penalties for early CD withdrawal. If this warning has already been given once, it is no longer necessary for the system to rewarn the caller, lest that rewarning constitute annoyance.

It is yet another object of the present invention to provide a system further comprising means for storing voice data, text data and image data. This results in a system that has the flexibility to adapt to changing application requirements without physically modifying the system. In this way, the system becomes an integrated deliverer of information.

It is a further object of the present invention to provide a system further comprising means for presenting information intended for delivery to a particular caller to the particular caller. This is another way of describing a mail system, that has been previously defined.

It is another object of the present invention to provide a system further comprising means for presenting information to a caller in a manner determined by the caller. Again, as previously defined, this describes an interactive system.

It is a further object of the present invention to provide a system further comprising means for presenting information to caller in a predetermined manner. This is another way of stating hat the system of the present invention has the capability to operate as a bulletin system, that also has been previously defined.

It is another object of the present invention to provide a system further comprising means for cross-referencing single records to one another to thereby create a "meta-record". This is a very important concept that is best explained by way of an example. Perhaps a system has been configured to make outbound calls and interact with the called parties to provide them information in a manner they direct. Perhaps this system has been provided with a list of number corresponding to current customers of the business and that it is important to have a response from each of the customers.

The system then begins to contact the customers, one by one. It first tries customer number one, but receives a busy signal and hangs up. After successfully interacting with other customers for a few hours, the system retries customer number one. Although the system successfully reaches customer number one on the second try, the customer instructs the system to call again two hours later, when it is more convenient for the customer. As instructed, the system re-tries two hours later, successfully interacts with the customer and concludes the necessary interaction. As it stands, there are three individual call records corresponding to the above-described calls. The system of the present invention cross-references the individual call records with respect to one another without destroying their individual identity so as to provide a linked list of calls pertaining to the complete interaction with customer number one. This results in an audit trail within the system and allows reporting of system functioning on a customer-by-customer basis, rather than just on a call-by-call basis.

It is another object of the present invention to provide a system further comprising a common memory for storing data selected from the group consisting of: voice, text and image data. The tight integration of the system of the present invention allows, for the first time, use of a common memory, accessible by all of the functional partitions within the system, for storing all of the data the system uses in its communication with callers.

It is yet a further object of the present invention to provide a system further comprising a common processor for accessing the common memory to thereby provide communication with a caller via a telephone exchange coupled to the processor. Again, as a result of tight integration, a single common processor can serve to link the common memory and can operate the various functional partitions in a time-sharing or concurrent fashion. Architecturally, this results in a single machine functioning in roles that, in the prior art, required multiple machines.

Still another object of the present invention is to provide an integrated call session record-keeping system further comprising means for storing automatic call directing data.

Another object of the present invention is to provide an integrated call session record-keeping system further comprising means for storing voice data.

Still yet another object of the present invention is to provide an integrated call session record-keeping system further comprising means for storing text data.

Yet another object of the present invention is to provide an integrated call session record-keeping system further comprising means for storing image data, that may include fax, graphics or moving image data.

Still another object of the present invention is to provide an integrated call session record-keeping system further comprising means for storing automatic number identification data.

Still yet another object of the present invention is to provide an integrated call session record-keeping system further comprising means for storing outbound calling data.

For purposes of the present invention, a functional partition is defined to be a particular function that, in the prior art, an individual machine would have handled. For instance, whereas the prior art provided a fax machine, the present invention provides a fax partition; and whereas the prior art provided an ACD, the present invention provides an ACD partition. As has been described, these partitions share memory and processing resources and can share information with one another via call records, among other ways.

In the attainment of the foregoing objects, the apparatus which embodies the preferred embodiment of the present invention is an integrated telephone system comprising (1) a common memory for storing data selected from the group consisting of: voice, text and image data, (2) a common processor for accessing the common memory to thereby provide communication with a caller via a telephone exchange coupled to the processor in a system mode selected from the group consisting of: mail, interactive and bulletin, (3) means for creating and storing a single record containing data gathered during a single call session, (4) means for retaining the single record throughout a duration of the call to thereby eliminate a need to gather a particular datum multiple times during the particular call, the record containing information gathered from a caller and the record-keeping system; (5) a telephone switching device and (6) a plurality of telephone instruments coupled to the telephone system. The system further comprises means for cross-referencing single records to one another to thereby create a meta-record.

The foregoing has outlined rather broadly the features and technical advantages of the present invention so the detailed description of the invention that follows may be better understood. Additional features and advantages of the invention will be described hereinafter that form the subject of the claims of the invention. Those skilled in the art should appreciate that the conception and the specific embodiment disclosed may be readily utilized as a basis for modifying or designing other structures for carrying out the same purposes of the present invention. Those skilled in the art should also realize that such equivalent constructions do not depart from the spirit and scope of the invention as set forth in the appended claims.

### BRIEF DESCRIPTION OF THE DRAWINGS

For a more complete understanding of the present invention and the advantages thereof, reference is now made to the following drawings, taken in conjunction with the accompanying description, in which:
FIGURE 1 is a block diagram of a typical prior art PBX system having various special function systems attached thereto;
FIGURE 2 is a block diagram of the integrated system of the present invention; and
FIGURE 3 is a more detailed block diagram of the integrated system of the present invention.

### DETAILED DESCRIPTION OF THE INVENTION

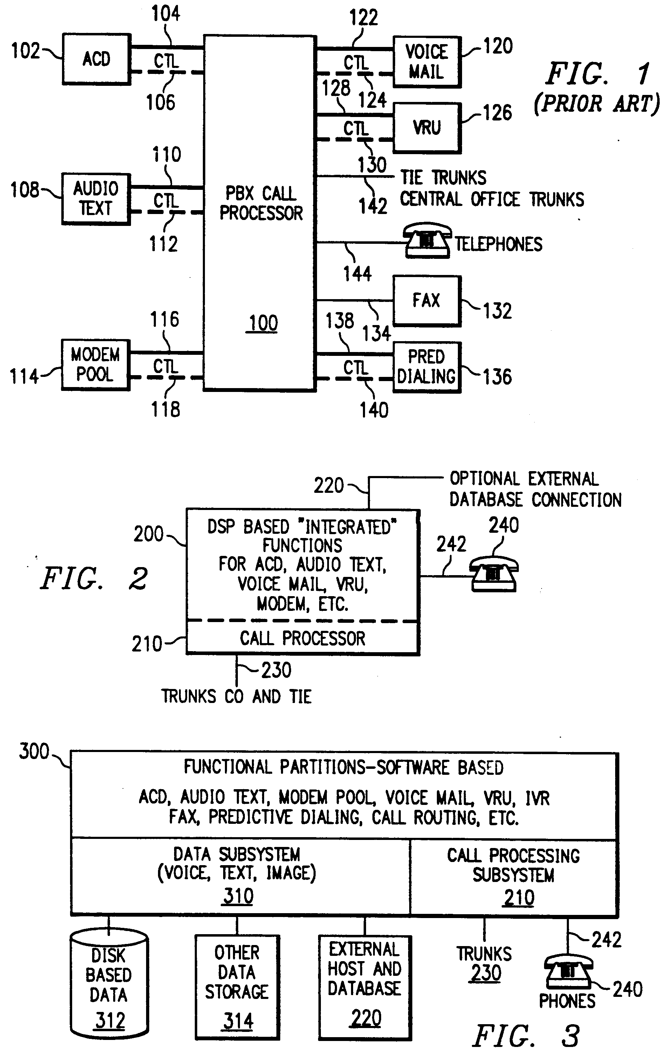

Turning now to FIGURE 1, illustrated is a block diagram of a typical private branch exchange ("PBX") system having various special function systems attached thereto. The PBX, designated 100, functions as a stand-alone call processor. An automatic call distribution ("ACD") system 102 is coupled to the PBX by data line 104 and control line 106. An audio text system 108 is coupled by data line 110 and control line 112. A modem pool 114 is coupled by data line 116 and a control line 118. A voice mail system 120 is coupled by a data line 122 and a control line 124. A voice response unit ("VRU") 126 is coupled by a data line 128 and a control line 130. A facsimile ("fax") system 132 is coupled by a data line 134. A predictive dialing system 136 is coupled by a data line 138 and a control line 140. Finally, the PBX 100 communicates with a telephone exchange or central office (not shown) by trunk lines 142 and to telephones 144.

The data lines 104, 110, 116, 122, 128, 134, 138 carry data representing voice, text or images to be transmitted to the telephone exchange (not shown) or the telephones 144, i.e., outside the system. The control lines 106, 112, 118, 124, 130, 140 carry information that is used within the system to coordinate the activities of the various loosely connected subsystems.

It is apparent from FIGURE 1 that whatever information is to be shared between the various systems 102, 108, 114, 120, 126, 132, 136 has to be routed through the PBX 100 via the respective control lines 106, 112, 118, 124, 130, 140. The PBX 100 dictates the protocol to be used in sharing the information and thereby severely restricts the nature and the speed of data interchange. This is a primary disadvantage of such prior art systems and gives rise to the many problems outlined previously.

Turning now to FIGURE 2, illustrated is a block diagram of the integrated system of the present invention, shown is a single functional block, referenced by its two main portions: an integrated system 200 and a call processor 210. The integrated system 200 is responsible for providing all of the functions provided for in the prior art system by the various system that attached to the PBX. The systems are fully integrated in that they share computer hardware and software wherever possible in a manner that will be apparent to those skilled in the relevant art once the possibility of combining the systems is disclosed. The call processor 210 is responsible for performing switching tasks performed by the PBX 100 of FIGURE 1. The call processor 210, however, is not responsible for passing control signals between the various functions that have now been integrated into the system 200 because the system 200 maintains its own internal control. As in the prior art system of FIGURE 1, the system of FIGURE 2 is coupled to telephones 240 via a line or lines 242. The system can also be coupled to an external database 220 for data interchange therewith.

Turning now to FIGURE 3, illustrated is a more detailed block diagram of the integrated system of the present invention, shown is a general purpose hardware and software processing system 300. The system 300 is coupled to subsystems that have been tailored to handle the general categories of tasks performed by the system as a whole: voice, text and image processing. Further, the system is configurable as a mail system, an interactive system or a bulletin system, depending upon the application environment to be accommodated. Accordingly a data subsystem 310 is shown having disk-based data storage 312 and other data storage 314 coupled thereto. The disk-based and other storage 312, 314 allow the subsystem 310 to store and recall data representing voice, text and/or visual images to thereby allow the system as a whole to communicate in any one of these modes with callers using the system. The data subsystem 310 is also shown as coupled to a an optional external database 220. This database allows the system of the present invention to communicate with an external system containing a database. For instance, in a bank, the system of the present invention may be called upon to communicate with the bank's main computer system, on which is stored customers's account balances and the like, to thereby allow the system of the present invention to query and retrieve selected information from the main computer system. This selected information could be caller-specific, such as the caller's account balance, in the case of operation of a mail system. This selected information could also be caller-selected public information, delivered via an interactive system. Finally, this selected information could be delivered to a caller in a predetermined manner, as in the context of a bulletin system.

Finally, a call processing subsystem 210 has a trunk line 230 to a telephone exchange (not shown) and telephones 240, coupled via a line or lines 242, just as in FIGURE 2. It is apparent from the architecture presented in FIGURE 3 that the system shown has the capacity to allow the various component subsystems therein to cooperate to an extent unattainable in the prior art architecture of FIGURE 1.

A principal advantage and point of novelty of the present invention is that the architecture allows a single record to be created, stored, updated and referred to during the course of a single call session. In contrast to the example presented in the separate prior art systems previously described, the architecture of the present system allows a record to be created that contains the information given the system while the person is dealing with the ACD system. As the person exits the ACD queue and enters the voice mail system, his record "follows along," thereby avoiding the need for the voice mail system to request again the information. Extending the example, if the person leaves his message with the voice mail system, perhaps the message is that the person wishes a fax returning his answer. The voice recognition system can interpret the request and the fax system can respond with the appropriate response, depending on the nature of the request. All of this interaction is made possible by the integration of the system.

Of course, it is not necessary that the record actually be moved from the ACD to the voice mail system and to the fax system as the caller moves among the systems. The record could simply reside within, say, a call-record database and be accessed and updated by the various systems as they handle the call. Such systems for building and maintaining records of call progress are not in themselves new. But that a single record can "follow" a caller through many different systems and modes of data communication is new. It is the tight integration of the previously separate data-handling systems that allows this unitary call-record building and reporting feature.

One extension of the idea of building a single record of a single call, without regard as to how the call proceeds through the system of the present invention is the idea of a "meta-record." Meta-records are used in one embodiment of the present invention. A meta-record is essentially a linked list of individual call-records, each of which individual call-records pertaining to an individual call. For instance, assuming an outbound, predictive dialing system has been tasked with calling a particular person. Perhaps the system must make multiple attempts to reach the person, due to the person's not being at the number being called or on the phone when the system attempts a call. If the system employs meta-records, these individual failed attempts to reach the person will be linked together, along with any subsequent successful calls, even though the calls are recorded and stored as separate, individual call-records. That the records are linked into a single meta-record can yield valuable information to the system or its users concerning, for instance, the availability of a particular person to take calls or the history of interaction with a particular person over a series of calls.

From the foregoing, it is apparent that the present invention is the first to provide an integrated telephone call session record-keeping system that creates and stores a single record containing data gathered during a single call session and retains the single record throughout a duration of the call to thereby eliminate a need to gather a particular datum multiple times during the particular call.

The system comprises a common memory for storing voice, text or image data and a common processor for accessing the common memory to thereby provide mail, interactive or bulletin communication with a caller via a telephone exchange coupled to the processor. The disclosed system is able to replace several prior art separate systems, including: automatic call directing systems, audio text systems, voice mail systems, voice response systems, automatic number identification systems, facsimile and other image-based systems and outbound calling systems.

Although the present invention and its advantages have been described in detail, it should be understood that various changes, substitutions and alterations may be made therein without departing from the scope of the invention as defined and set forth in the appended claims.

## Claims

1. An integrated telephone call session record-keeping system, comprising:
means for creating a single record containing data gathered during a single call session; and
means for storing data pertaining to said single call session in said single record throughout a duration of said call, said data gathered from a plurality of functional partitions within said system to thereby eliminate a need to gather a particular datum multiple times during said single call; and
wherein said record contains information gathered from a caller; and
wherein said record contains information gathered from said functional partitions.

2. The system as recited in Claim 1 further comprising a common memory for storing data selected from the group consisting of: voice, text and image data.

3. The system as recited in Claim 2 further comprising a common processor for accessing said common memory to thereby provide communication with a caller via a telephone exchange coupled to said processor.

4. An integrated telephone call session record-keeping system, comprising:
means for gathering data pertaining to a particular call from multiple functional partitions within said system;
means for creating a single record containing said data; and
means for retaining said single record throughout a duration of said call to thereby eliminate a need to gather a particular datum multiple times during said particular call.

5. The system as recited in Claim 4 further comprising means for cross-referencing single records to one another to thereby create a meta-record.

6. An integrated telephone call processing system, comprising:
a common memory for storing data selected from the group consisting of: voice, text and image data;
means for creating and storing in said common memory a single record containing data gathered during a single call session; and
a common processor for accessing said common memory to thereby provide communication with a caller via a telephone exchange coupled to said processor; and
wherein said record contains information gathered from a caller; and
wherein said record contains information gathered from multiple functional partitions within said system.

7. The system as recited in Claim 6 further comprising means for presenting information to a caller in a manner determined by said caller.

8. The system as recited in Claim 6 further comprising means for presenting information to caller in a predetermined manner.

9. An integrated telephone system, comprising:
a common memory for storing data selected from the group consisting of: voice, text and image data;
a common processor for accessing said common memory to thereby provide communication with a caller via a telephone exchange coupled to said processor in a system mode selected from the group consisting of: mail, interactive and bulletin;
means for creating and storing a single record containing data gathered during a single call session;
means for retaining said single record throughout a duration of said call to thereby eliminate a need to gather a particular datum multiple times during said particular call, said record containing information gathered from a caller and said record-keeping system;
a telephone switching device; and
a plurality of telephone instruments coupled to said telephone system.

10. The system as recited in Claim 9 further comprising means for cross-referencing single records to one another to thereby create a meta-record.
